# EUROPÄISCHE PATENTANMELDUNG

(11) **EP 0 625 366 A2**
(43) Veröffentlichungstag der Anmeldung: **23.11.1994**
(21) Anmeldenummer: 94107606.9
(22) Anmeldetag: 17.05.1994
(51) Int. Cl.: B01D 46/04, B01D 46/42

(54) **Filteranlage**

(30) Priorität: 18.05.1993 DE 9307537 U
(71) Anmelder: VENTILATORENFABRIK OELDE GMBH, D-59302 Oelde (DE)
(72) Erfinder: Kreft, Rolf, D-59269 Beckum (DE)
(74) Vertreter: Loesenbeck, Karl-Otto, Dipl.-Ing.

(57) **Zusammenfassung**

Es sind Filteranlagen bekannt, bei denen Filterschläuche, -taschen oder dergleichen (2) mittels fest installierter, druckluftbetriebener Reinigungsdüsen gesäubert werden. Die Installation der bekannten Reinigungsdüsen ist jedoch sehr aufwendig und daher kostenintensiv. Dies trifftt auch für die Herstellung und den Betrieb der Reinigungsdüsen zu. Es ist daher die Aufgabe der Erfindung eine Filteranlage zu schaffen, die kostengünstiger herstell- und betreibbar ist. Hierzu ist vorgesehen, daß Luftaustrittsöffnungen, beispielsweise die Reinigungsdüsen, an einem verfahrbaren Wagen (3) und in einer Reihe nebeneinanderliegend, quer zur Verfahrrichtung angeordnet sind.
Um eine effektive Reinigung zu erzielen, sind durch die Erfindung erheblich weniger Reinigungsdüsen erforderlich, so daß sich insgesamt eine kostengünstigere Herstellung ergibt.

## Beschreibung

Die vorliegende Erfindung betrifft eine Filteranlage gemäß dem Oberbegriff des Anspruches 1.

Mit derartigen Filteranlagen werden üblicherweise Abgase gereinigt, wobei diese die Filteranlage durchströmen, während sich die Schadstoffe an den als Filterkörper fungierenden Filterschläuchen, -taschen oder -patronen ablagern.

Die Reinigung der Filterschläuche erfolgt beispielswiese mit Druckluftstoß, wobei bei den bekannten Filteranlagen jedem Filterschlauch eine Reinigungsdüse zugeordnet ist.
Eine Steuerung der Reinigungsdüsen erfolgt sowohl zeit- als auch mengenabhängig, wobei die Taktzeit den Anforderungen angepaßt wird.

Allerdings ist nicht nur die Installation der Reinigungsdüsen aufgrund ihrer hohen Anzahl sehr aufwendig und daher teuer, sondern auch deren Herstellung und Betrieb, so daß sich insgesamt eine ungünstige Kostensituation ergibt.
Darüber hinaus ist der steuerungstechnische Aufwand relativ hoch, da es nicht sinnvoll ist, sämtliche Reinigungsdüsen gleichzeitig zu betreiben, sondern nacheinander geschaltet. Auch dies führt zu erheblichen Herstellungskosten.

Der vorliegenden Erfindung liegt daher die Aufgabe zugrunde, eine Filteranlage der gattungsgemäßen Art so zu gestalten, daß sie kostengünstiger herstell- und wirtschaftlicher betreibbar ist.

Diese Aufgabe wird erfindungsgemäß durch die im kennzeichnenden Teil des Anspruches 1 genannten Merkmale gelöst.

Durch diese konstruktive Ausgestaltung der Filteranlage ist zunächst einmal eine erhebliche Senkung der Herstellungs- und Installationskosten möglich, da gegenüber den bekannten Filteranlagen eine erheblich eingeschränkte Anzahl von Luftaustrittsöffnungen erforderlich sind, die nach einer vorteilhaften Ausgestaltung der Erfindung als druckluftbetriebene Reinigungsdüsen ausgebildet sein können.

Anstelle von druckluftbetriebenen Reinigungsdüsen kann die Reinigungsvorrichtung bzw. der Wagen mit einem Spülluft erzeugenden Ventilator versehen sein, wobei dann zweckmäßigerweise gleichfalls mehrere, nebeneinander liegende Luftaustrittsöffnungen vorzusehen sind, die die Filterschläuche mit Spülluft beaufschlagen und so für eine außenseitige Reinigung der Filterschläuche sorgen.

Auch steuerungstechnisch bietet die Erfindung erhebliche Vorteile, die sich insbesondere aus einem geringeren Aufwand ergeben.

In diesem Zusammenhang sieht eine vorteilhafte Weiterbildung der Erfindung vor, daß an dem Wagen ein Näherungsschalter vorgesehen ist, der Markierungspunkte anfährt, die jeweils in Höhe der zu reinigenden Filterschlauchreihen angeordnet sind, so daß der Wagen, von dem Näherungsschalter gesteuert, jeweils um eine Reihe verfährt und die entsprechenden Filterschläuche gereinigt werden können.

Nach einem weiteren Gedanken der Erfindung ist vorgesehen, hinter den Luftaustrittsöffnungen eine Abdeckung anzubringen, mit der die zuvor gereinigte Reihe der Filterschläuche nach dem entsprechenden Verfahren des Wagens abgedeckt wird, so daß diese gereinigten Filterschläuche nicht durch den nachfolgenden neuerlichen Reinigungsvorgang der nächsten Filterschlauchreihe wieder verschmutzt werden und die Beaufschlagung der Filterschläuche nicht plötzlich, sondern kontinuierlich erfolgt. Hierdurch wird ein höherer Entstaubungsgrad erreicht. Die Reinigungsdauer kann, wie bisher, durch ein Zentrallrelais gesteuert werden.

Eine Weiterentwicklung der Erfindung sieht vor, daß zwischen den Filterschläuchen, im oberen Bereich angeordnet, Düsenrohre vorgesehen sind, die mit einem Druckluftaustritt des Wagens in Wirkverbindung bringbar sind.

Hierdurch werden auch die Zwischenräume zwischen zwei Filterschlauchreihen wirkungsvoll gereinigt. Auch eine Brückenbildung durch von den Außenflächen der Filterschläuche abgelösten Schmutz wird verhindert.
Zweckmäßigerweise ist jedem Zwischenraum zwischen zwei Filterschlauchreihen ein Düsenrohr zugeordnet, wobei die Druckluftzufuhr ventilgesteuert ist, d.h., ein Luftaustritt aus den Luftaustrittsöffnungen des Wagens erfolgt nicht gleichzeitig mit der Beaufschlagung des Düsenrohres mit Druckluft.

Weitere vorteilhafte Ausgestaltungen der Erfindung sind in den Unteransprüchen gekennzeichnet.

Ausführungsbeispiele der Erfindung werden nachfolgend anhand der beigefügten Zeichnungen beschrieben.

Es zeigen:
- Fig. 1: eine schematische Seitenansicht einer erfindungsgemäße Filteranlage,
- Fig. 2: eine Einzelheit der Filteranlage gleichfalls schematisch dargestellt,
- Fig. 3: eine Draufsicht auf die Einzelheit nach der Fig. 2,
- Fig. 4: eine Vorderansicht auf die Einzelheit gesehen in Richtung des Pfeiles IV in Fig. 3,
- Fig. 5: eine schematisch dargestellte Einzelheit eines weiteren Ausführungsbeispieles der Erfindung in einer Seitenansicht,
- Fig. 6: eine Teilvorderansicht der Einzelheit nach der Fig. 5.

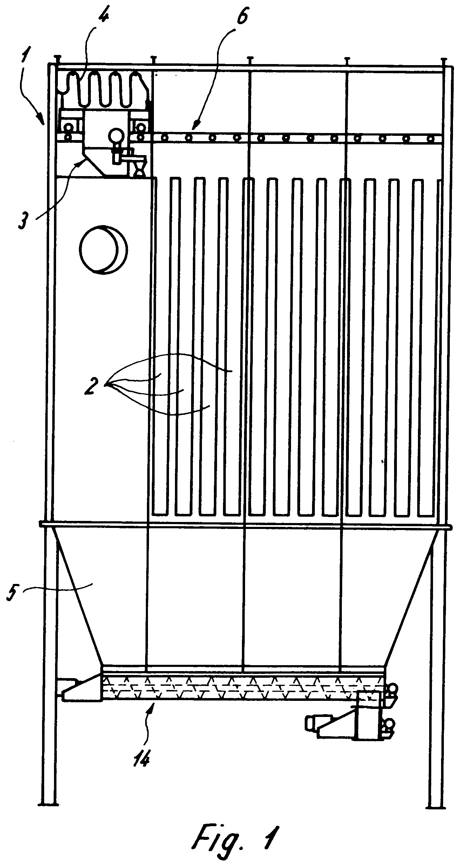

Eine in der Fig. 1 dargestellte Filteranlage ist mit vertikal angeordneten Filterschläuchen 2 ausgerüstet, die in einen Auffangtrichter 5 münden, an dem wiederum eine Austrageeinrichtung 14 angeordnet ist, über die aus den Filterschläuchen 2 in den Auffangtrichter 5 austretende Stäube od. dgl. abführbar sind.

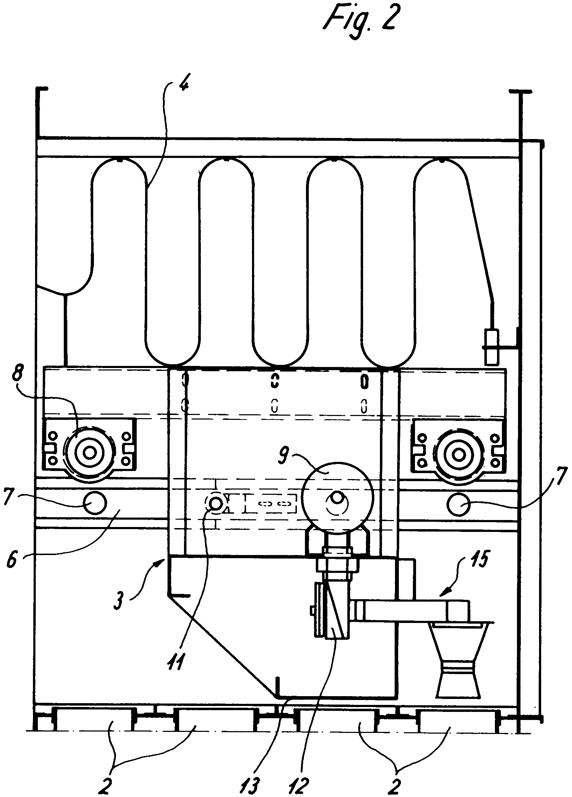

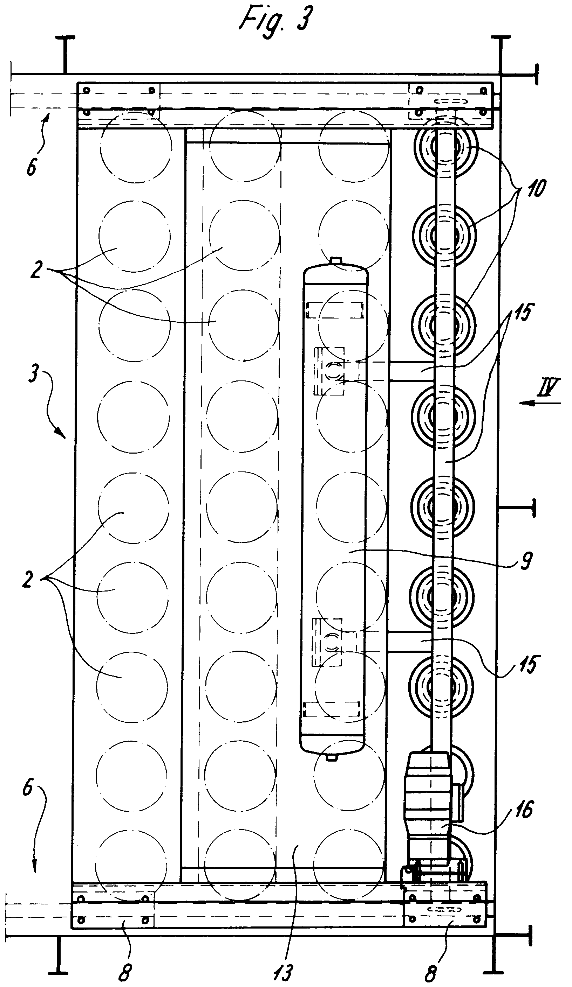

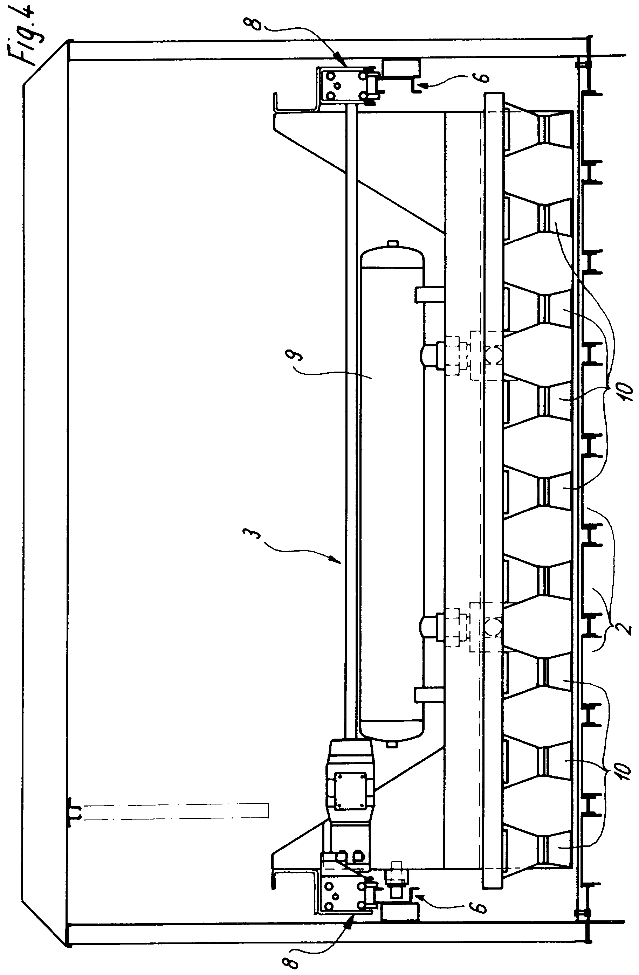

Oberhalb der Filterschläuche 2, also auf der dem Auffangtrichter 5 gegenüberliegenden Seite, ist eine Reinigungsvorrichtung 1 angeordnet, die als Einzelheit in den Fig. 2 bis 4 dargestellt ist.

Diese Reinigungsvorrichtung 1 besteht aus einem Wagen 3, der mit Rollen 8 auf seitlich am Gehäuse der Filteranlage 1 angeordneten Führungsschienen 6 hin und her verfahrbar geführt ist.

Weiter weist der Wagen 3 eine Reihe von Reinigungsdüsen 10 auf, wobei sich die Reihe quer zur Bewegungsrichtung des Wagens 3 erstreckt und jedem in dieser Reihe liegenden Filterschlauch 2 eine Reinigungsdüse 10 zugeordnet ist. Im vorliegenden Ausführungsbeispiel sind die Reinigungsdüsen 10 als Venturidüsen ausgebildet.

Über Zuführleitungen 15 sind die Reinigungsdüsen 10 mit einem Druckluftluftbehälter 9 verbunden, der über eine Schleppleitung 4 an einem nicht dargestellten Kompressor o.dgl. angeschlossen ist. Ein zwischen den Zuführleitungen 15 und dem Druckluftbehälter 9 angeordnetes Magnetventil 12 steuert die Druckluftzufuhr, wobei die Steuerung in Abhängigkeit von einem Näherungsschalter 11 erfolgt, der überdies den Verfahrweg des Wagens 3 steuert und dabei einen Motor 16 entsprechend regelt. Dieser Motor treibt zumindest eine der Rollen 8 an.

Entsprechend den Reihenabständen, in denen die Filterschläuche 2 querverlaufend zur Bewegungsrichtung des Wagens angeordnet sind, sind in einer Führungsschiene 6 Markierungspunkte, im vorliegenden Ausführungsbeispiel Löcher 7 vorgesehen, die von dem Näherungsschalter 11 erfaßt und in an sich bekannter Weise im Sinne einer Steuerung des Motors 16 verwertet werden.

Den Reinigungsdüsen 10 in Bewegungsrichtung des Wagens 3 nachgeordnet ist eine Abdeckung 13, die die Öffnungen der Reihe von Filterschäuchen 2 abdeckt, die bereits gereinigt und der Reihe neu zu reinigender Filterschläuche 2 nach dem Verfahrens des Wagens 3 nachgeordnet sind. Somit ist gewährleistet, daß bei der Reinigung der entsprechenden Filterschläuche 2 aufgewirbelte Staubpartikel nicht mehr in die zuvor gereinigten Filterschläuche 2 eindringen können.

Anstelle des Näherungsschalters 11 sind selbstverständlich auch andere bekannte, wegsteuernde Einrichtungen denkbar. Die Dauer der Reinigung kann beispielsweise über ein Zeitrelais erfolgen.

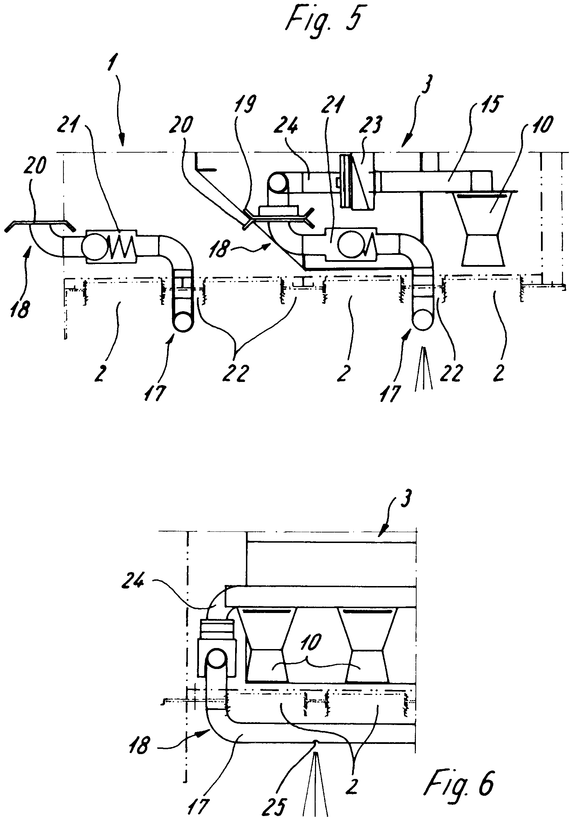

Als besonders vorteilhaft hat sich erwiesen, daß der Druckluftbehälter 9 in unmittelbarer Nähe der Reinigungsdüsen 10 gleichfalls als Bestandteil des Wagens 3 angeordnet ist, so daß auftretende Druckluftverluste gering gehalten werden. In den Fig. 5 und 6 ist eine Reinigungsvorrichtung 1 dargestellt, die im oberen Bereich, jeweils zwischen zwei Reihen Filterschläuchen 2, also parallel zur Anordnung der Reinigungsdüsen 10 verlaufend, jeweils ein Düsenrohr 17 aufweist, das sich im wesentlichen über die gesamte Breite der jeweils zugeordneten Filterschlauchreihen erstreckt.

Jedes Düsenrohr 17 ist mit Düsenöffnungen 25 versehen, aus denen Druckluft austritt, mit der der jeweilige Zwischenraum 22 gereinigt wird.

Jedes Düsenrohr 17 ist fest installiert und weist in zumindest einem seitlichen Bereich einen Verbindungsstutzen 18 auf, der mit einer Verbindungsplatte 20 versehen ist.

Beim Verfahren des Wagens 3 fährt eine daran angeschlossene Verbindungsplatte 19, die über eine Zuführleitung 24 mit einem Druckluftversorger des Wagens 3 verbunden ist, auf die Verbindungsplatte 20 auf und stellt so eine für druckluftdurchlässige Verbindung zwischen der Zuführleitung 24 und dem Verbindungsstutzen 18 her.

Die Steuerung der Druckluftzufuhr erfolgt über ein Magnetventil 23, das zwischen der Zuführleitung 15 und der Zuführleitung 24 angeordnet ist, bei dessen Betätigung entweder aus den Reinigungsdüsen 10 oder aus dem Düsenrohr 17 Druckluft austritt.

Um zu verhindern, daß bei Nichtgebrauch des Düsenrohres 17, wenn die Verbindungsplatte 20 freiliegt, verschmutzte Luft durch den Verbindungsstutzen 18 in den Zwischenraum 22 gelangen kann, ist im Verbindungsstutzen 18 ein Rückschlagventil 21 vorgesehen, das dann, wenn keine Druckluft zugeführt wird, den Verbindungsstutzen 18 verschließt. Die Steuerung der Druckluft erfolgt im Zusammenwirken mit der Steuerung des Wagens 3, so daß in jedem Fall eine optimale Reinigung der Filterschläuche 2 gewährleistet ist.

## Patentansprüche

1. Filteranlage mit vertikal angeordneten Filterschläuchen, -taschen oder -patronen, die in einen Aufangtrichter münden, an den eine Austrageeinrichtung angeschlossen ist, und mit einer oberhalb der Filterschläuche, der Austrageeinrichtung gegenüberliegend angeordneten Reinigungsvorrichtung, die mindestens eine Luftaustrittsöffnung aufweist, durch die Reinigungsluft zwischen die Filterschläuche führtbar ist, **dadurch gekennzeichnet,** daß die Luftaustrittsöffnungen an einem verfahrbaren Wagen (3) und in einer Reihe nebeneinanderliegend, quer zur Verfahrrichtung angeordnet sind.

2. Filteranlage nach Anspruch 1, dadurch gekennzeichnet, daß Luftaustrittsöffnungen als druckluftbetriebene Reinigungsdüsen (10) ausgebildet sind.

3. Filteranlage nach Anspruch 1, dadurch gekennzeichnet, daß die Reinigungsvorrichtung mit einem Spülluft erzeugenden Ventilator versehen ist.

4. Filteranlage nach einem der Ansprüche 1 bis 3, dadurch gekennzeichnet, daß der vorzugsweise mittels eines Motors antreibbare Wagen (3) jeweils um den Abstand zwischen zwei Reihen von Filterschläuchen, die quer zur Bewegungsrichtung des Wagens (3) angeordnet sind, verfahrbar ist.

5. Filteranlage nach Anspruch 2, dadurch gekennzeichnet, daß an dem Wagen (3) ein über Zuführleitungen mit den Reinigungsdüsen (10) verbundener Druckluftbehälter (9) angeordnet ist, der über eine Schleppleitung (4) mit einem Kompressor verbunden ist.

6. Filteranlage nach Anspruch 2, dadurch gekennzeichnet, daß die Reinigungsdüsen (10) als Venturidüsen ausgebildet sind.

7. Filteranlage nach Anspruch 1, dadurch gekennzeichnet, daß der Wagen (3) auf Rollen (8) gelagert ist, die auf mit dem Gehäuse der Filteranlage verbundenen Schienen (6) geführt sind.

8. Filteranlage nach Anspruch 1, dadurch gekennzeichnet, daß den Luftaustrittsöffnungen in Bewegungsrichtung des Wagens (3) nachgeordnet eine Abdeckung (13) vorgesehen ist, wobei der Mittenabstand zwischen den Reinigungsdüsen (10) und der Abdeckung (13) dem Abstand zwischen zwei Reihen Filterschläuchen entspricht und wobei die Breite der Abdeckung mindestens dem Durchmesser eines Filterschlauches (2) entspricht.

9. Filteranlage nach Anspruch 1, dadurch gekennzeichnet, daß zwischen den Filterschläuchen (2), im oberen Bereich angeordnet, Düsenrohre (17) vorgesehen sind, die mit einem Druckluftaustritt des Wagens (3) in Wirkverbindung bringbar sind.

10. Filteranlage nach Anspruch 9, dadurch gekennzeichnet, daß jedes Düsenrohr (17) mittels eines Rückschlagventils (21) verschließbar ist.

11. Filteranlage nach Anspruch 9, dadurch gekennzeichnet, daß die Druckluftzufuhr zum Düsenrohr (17) bzw. zu den Reinigungsdüsen (10) über ein zwischengeschaltetes Magnetventil (23) steuerbar ist.
